# EUROPEAN PATENT APPLICATION

(11) **EP 2 706 457 A1**
(43) Date of publication of application: **12.03.2014**
(21) Application number: 13182472.4
(22) Date of filing: 30.08.2013
(51) Int. Cl.: G06F 9/445, G06F 9/44

(54) **Vehicle software update via vehicle entertainment unit**

(30) Priority: 06.09.2012 US 201213605459
(71) Applicant: Delphi Technologies, Inc., Troy, MI 48007 (US)
(72) Inventor: Mota, Luiz C. Garcez, 09560-120 São Caetano do Sul - São Paulo (BR)
(74) Representative: Robert, Vincent

(57) **Abstract**

A vehicle (16) software update (24) system (10) for updating software in vehicle (16) modules coupled to a vehicle communication network (14). Software updates are processed through an entertainment unit (20) (e.g. vehicle (16) radio) configured to be coupled to the vehicle communication network (14). The entertainment unit (20) is equipped with a software input means configured to receive a software update (24) for a vehicle module (12), and transfer the software update (24) to the vehicle module (12) via the vehicle communication network (14). Software updates may be provided to the entertainment unit (20) using a USB memory device (30) plugged into a USB port (28) in the entertainment unit (20), or communicated wireless via a WI-FI® or BLUETOOTH® transceiver.

## Description

### TECHNICAL FIELD

This disclosure generally relates to updating the software of a vehicle module, and more particularly relates to an entertainment unit configured to receive the software update and transfer the update to the vehicle module.

### BACKGROUND OF INVENTION

Software updates of vehicle modules such as an engine control module (ECM), sensing and diagnostic module (SDM) for inflatable restraint systems, body control module (BCM), anti-lock braking system (ABS), transmission control module (TCM), and the like, are typically performed by trained technicians using laptop computers equipped with dedicated software, expensive and complex scanners, and in accordance with elaborate traceability/security processes to control the distribution of the software updates. In general, this process is expensive, time-consuming, and often causes automobile customer dissatisfaction.

### SUMMARY OF THE INVENTION

In accordance with one embodiment, a vehicle software update system for updating software in vehicle modules coupled to a vehicle communication network is provided. The system includes an entertainment unit is configured to be coupled to the vehicle communication network. The entertainment unit is equipped with a software input means configured to receive a software update for a vehicle module, and transfer the software update to the vehicle module via the vehicle communication network.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle interior equipped with a vehicle software update system in accordance with one embodiment; and

Fig. 2 is a diagram of an entertainment unit that is part of the vehicle software update system of Fig. 1.

### DESCRIPTION OF THE PREFERRED EMBODIMENT

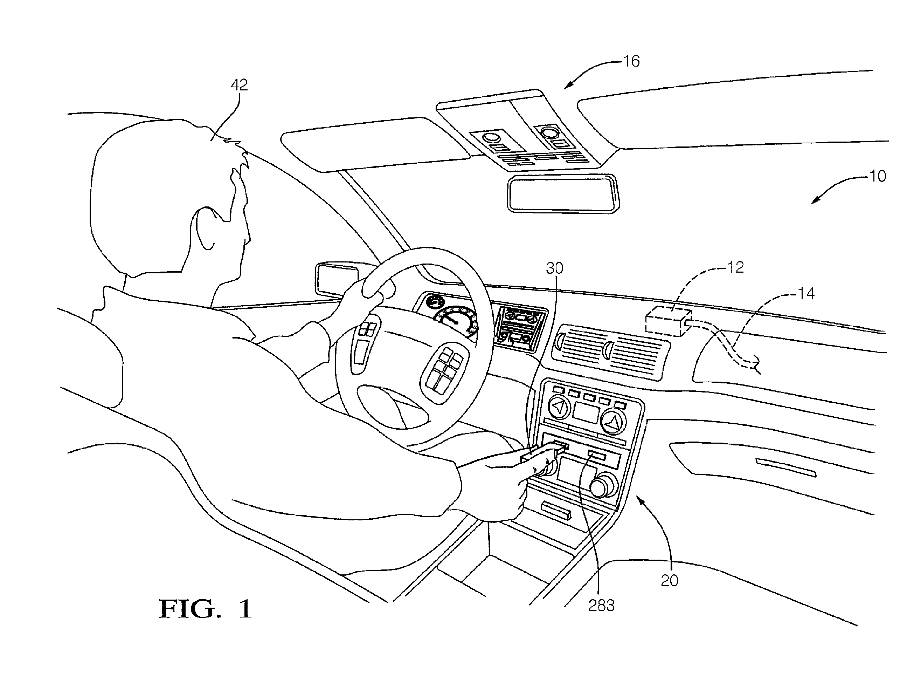

Fig. 1 illustrates a non-limiting example of a vehicle software update system, hereafter the system 10, for updating software in a vehicle module 12 coupled to a vehicle communication network 14 in a vehicle 16. The vehicle module 12 may be, but is not limited to, an engine control module (ECM), sensing and diagnostic module (SDM), body control module (BCM), anti-lock braking system (ABS), transmission control module (TCM), and the like. It may be desirable to update the software in the vehicle module 12 because, for example, the software update provides improved performance or better compliance with government regulations regarding the vehicle 16. The vehicle communication network 14 may be a controller area network (CAN) link or other known digital communication link. In general, the system 10 is configures so software updates can be uploaded to the vehicle module 12 via the vehicle communication network 14. While the non-limiting illustration shows only one vehicle module, it is contemplated that a plurality of vehicle modules will be connected to the vehicle communication network 14. By suitably interfacing with the vehicle communication network 14, any of the vehicle modules connected to the vehicle communication network 14 can receive a software update.

The system 10 includes an entertainment unit 20. As used herein, an entertainment unit may include a radio receiver for receiving radio frequency (RF) broadcasts and/or a compact disk (CD) player, and an amplifier to drive speakers, as will be recognized by those in the art. As will be explained in more detail below, the entertainment unit 20 is advantageously coupled to the vehicle communication network 14 so that the entertainment unit 20 can be used as a data pathway to update software in the vehicle module 12.

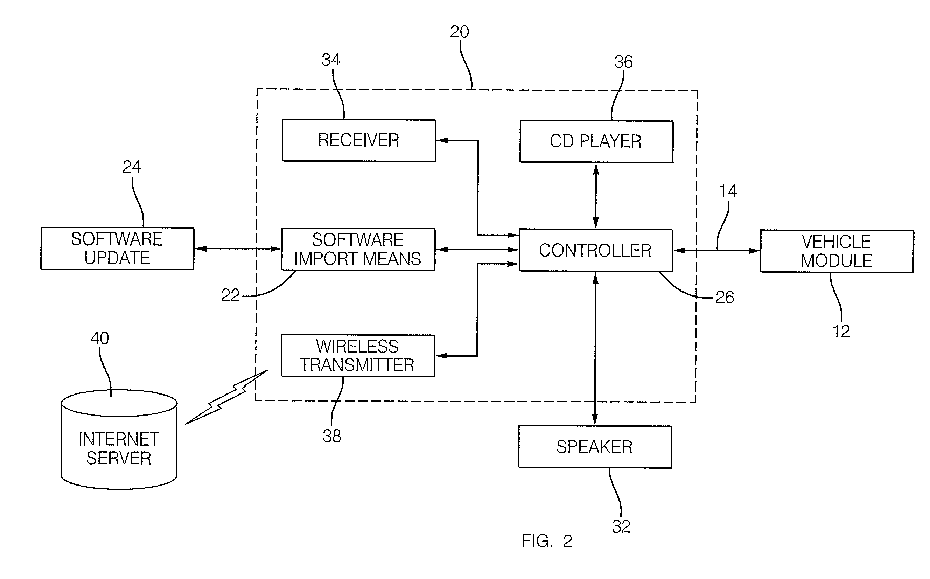

Fig. 2 further illustrates a non-limiting example of the entertainment unit 20. In order to update software in the vehicle module 12, the entertainment unit 20 may be equipped with a software input means 22 configured to receive a software update 24 for the vehicle module 12. In one embodiment, the software input means 22 may include a universal serial bus (USB) port 28 (Fig. 1) configured to receive the software update from a USB memory device 30. The USB memory device 30 may be more commonly known as a memory stick, thumb drive, flash drive, secure digital memory card (SD card), high density SD card (HDSD card), or other names known in the art. Many entertainment systems already include a USB port for downloading music data from a USB memory device, and so using that pre-existing feature for downloading the software update 24 does not incur significant additional cost to the entertainment unit 20.

Referring again to Fig. 2, the entertainment unit 20 may also include a controller 26 coupled to the software input means 22 that is configured to transfer or communicate the software update 24 to the vehicle module 12 via the vehicle communication network 14. The controller 26 may include a processor such as a microprocessor or other control circuitry as should be evident to those in the art. The controller 26 may include memory, including non-volatile memory, such as electrically erasable programmable read-only memory (EEPROM) for storing one or more routines, thresholds and captured data. The one or more routines may be executed by the processor to perform steps for processing data received by the controller 26 for updating software in the vehicle module 12, as described herein. As such, the entertainment unit 20 may be configured to download the software update 24 from the USB memory device 30, and upload the software update to the vehicle module 12.

The controller 26 may also operate speakers 32 based on signal received from a receiver 34 or the CD player 36. In another embodiment, the controller 26 may receive a software update from a compact disk present in the CD player 36, or the controller 26 may operate according to a program present on the compact disk.

In another embodiment, the entertainment unit 20 may include a wireless transceiver 38. Non-limiting examples of the wireless transceiver 38 are commercially available for various wireless communication protocols such as WI-FI® and BLUETOOTH®. If the entertainment unit 20 is equipped with a WI-FI® transceiver, then software update 24 may be retrieved from an internet server 40 when the vehicle is proximate to a WI-FI® hot spot, such as at an automobile dealership, or parked at the home of the owner or operator 42 of the vehicle 16. Alternatively, if the entertainment unit 20 is equipped with a BLUETOOTH® transceiver, then software update 24 may be retrieved from an internet server 40 by way of establishing communications through a smart phone (not show) carried by the operator 42.

Fig. 2 illustrates the entertainment unit 20 as having both the software input means 22 and the wireless transceiver 38. However, it should be recognized that the wireless transceiver 38 is a specific example of the software input means 22, and so illustrating both is only for the purpose of explanation and not limitation, i.e. both are not required. If the entertainment unit 20 is equipped with the wireless transceiver 38, then controller 26 is accordingly configured to download the software update 24 via the wireless transceiver 38, and upload the software update 24 to the vehicle module 12.

Accordingly, a vehicle software update system (the system 10) is provided. The system 10 makes it possible to download an ECM calibration file stored on the USB memory device 30 (e.g. thumb drive, pen drive) through the USB port 28 or from a smart phone by BLUETOOTH®. This is advantageous as automotive repair shops typically take longer to update ECM software and others module software than it takes to perform an oil filter replacement or other simple procedures. If the automotive dealership is equipped with WI-FI®, the entertainment unit 20 could recognize the vehicle 16 entering the dealership, establish the communication if available, download a software update 24 if available, such as the new module calibration, and do so automatically. Alternatively, the operator 42 could download from the Internet onto the USB memory device 30 a calibration update for ECM / TCM / BCM, or a calibration for performance or economy improvement (both approved by the government) and himself transport the software update 24 to vehicle 16.

While this invention has been described in terms of the preferred embodiments thereof, it is not intended to be so limited, but rather only to the extent set forth in the claims that follow.

## Claims

1. A vehicle (16) software update system (10) for updating software in vehicle (16) modules coupled to a vehicle communication network (14), said system (10) comprising:
an entertainment unit (20) configured to be coupled to the vehicle communication network (14), said entertainment unit (20) equipped with a software input means configured to receive a software update (24) for a vehicle module (12), and transfer the software update (24) to the vehicle module (12) via the vehicle communication network (14).

2. The system (10) in accordance with claim 1, wherein the entertainment unit (20) includes a universal serial bus (USB) port (28) configured to receive the software update (24) from a USB memory device (30).

3. The system (10) in accordance with claim 2, wherein the entertainment unit (20) includes a controller (26) configured to download the software update (24) from the USB memory device (30), and upload the software update (24) to the vehicle module (12)

4. The system (10) in accordance with claim 1, wherein the entertainment unit (20) includes a wireless transceiver (38) configured to receive the software update (24) from an internet server (40).

5. The system (10) in accordance with claim 4, wherein the entertainment unit (20) includes a controller (26) configured to download the software update (24) via the wireless transceiver (38), and upload the software update (24) to the vehicle module (12).
